Europäisches Patentamt

European Patent Office

Office européen des brevets

(11) Veröffentlichungsnummer: **0 196 552**
**A2**

## (12) EUROPÄISCHE PATENTANMELDUNG

(21) Anmeldenummer: 86103723.2

(22) Anmeldetag: 19.03.86

(51) Int. Cl.⁴: **G 01 G 19/32**

(30) Priorität: 29.03.85 DE 3511459

(43) Veröffentlichungstag der Anmeldung:
08.10.86 Patentblatt 86/41

(84) Benannte Vertragsstaaten:
FR GB IT

(71) Anmelder: PME Pack-Matic Engineering GmbH
Sandweg 1
D-6304 Lollar(DE)

(72) Erfinder: Kammler, Roman, Dr. Ing.
Wallstrasse 2
D-6520 Worms(DE)

(72) Erfinder: Baur, Walter, Dr.
Herzbergstrasse 37-39
D-6466 Gründau(DE)

(74) Vertreter: Schlee, Richard, Dipl.-Ing. et al,
Patentanwälte Dipl.-Ing. R. Schlee Dipl.-Ing. A. Missling
Bismarckstrasse 43
D-6300 Lahn-Giessen 1(DE)

(54) Wiegevorrichtung.

(57) Einem Weige-Produktbehälter (2) sind mehrere Teilmengen-Produktbehälter (3, 4) zugeordnet, die an einem gemeinsamen Träger (17) gehalten sind. Der Träger (17) ist schrittweise drehbar, so daß auf ihm befindliche Reigen aus Teilmenger-Produktbehältern (3, 4) mittels eines einzigen Schrittantriebes (22) gleichzeitig bewegbar und auf Wiege-Produktbehälter (2) ausrichtbar sind. Zur Zusammenstellung einer Verpackungsportion werden mittels eines einen Rechner enthaltenden Steuergerätes (6) solche Teilmengen ausgezählt und in einem Sammeltrichter (5) entleert, die zusammen möglichst genau die Verpackungs-portion ergeben. Die Wiegevorrichtung gestattet es, mit relativ wenigen Wiege-Produktbehältern (2) eine große Zahl von Teilmengen-Produktbehältern (3, 4) zu füllen, wodurch bei relativ geringem Bauaufwand eine große Leistung und Genauigkeit der Wiegevorrichtung erreicht wird.

EP 0 196 552 A2

./...

Croydon Printing Company Ltd

Fig.1

Kombinations - und Schleusen -
steuerung

PME Pack-Matic Engineering GmbH, 6306 Lollar

Wiegevorrichtung

Beschreibung:

Die Erfindung bezieht sich auf eine Wiegevorrichtung, insbesondere zum Wiegen von grobstückigen Produkten, mit einem Produktverteiler, mehreren Wiegeeinrichtungen, von denen jede einen vom Produktverteiler aus speisbaren Wiege-Produktbehälter und einen diesem zugeordneten Gewichtgeber aufweist, unterhalb der Wiege-Produktbehälter angeordneten Teilmengen-Produktbehältern, wobei einem Wiege-Produktbehälter mindestens zwei Teilmengen-Produktbehälter zugeordnet sind, in die der Inhalt der Wiege-Produktbehälter entleerbar ist, einem Sammeltrichter zum Sammeln von aus mehreren Teilmengen-Produktbehältern abgegebenen Teilmengen und einer Kombinations-Wahlschaltung, die aus den Teilmengen eine Kombination einer bestimmten Anzahl von Teilmengen ermittelt, die zusammen einer gewünschten Gesamtmenge möglichst nahekommen und die Entleerung in den Sammeltrichter durch Betätigung von Schleusen an den Teilmengen-Produktbehältern entsprechend steuert.

Wiegevorrichtungen dieser Art werden vor allem dann verwendet, wenn das Produkt aus Einzelstücken besteht, die ein verhältnismäßig großes Gewicht im Verhältnis zu der abzuwiegenden Menge haben und das Gewicht der Einzelstücke stark streut. Beispielsweise werden solche Wiegevorrichtungen bei der automatischen Verpackung von Nüssen, Bonbons, Gebäck, Obst oder Gemüse in Verbrauchspackungen verwendet. Die abzupackende Menge wird aus n Teilmengen zusammengesetzt, wobei jede der Teilmengen ein Gewicht von ungefähr 1 n auf-

weist, jedoch von diesem Gewicht im allgemeinen mehr oder weniger abweicht. Die Kombinations-Wahlschaltung wählt aus vielen Teilmengen (Anzahl größer als n) solche Teilmengen aus, daß deren Summe dem gewünschten Gesamtgewicht möglichst nahekommt.

Bei einer bekannten Wiegevorrichtung (EP-OS 0097 530) ist jedem Wiege-Produktbehälter nur ein Teilmengen-Produktbehälter zugeordnet. Der bauliche Aufwand einer solchen Wiegevorrichtung ist groß, da eine große Anzahl von Wiege-Produktbehältern mit zugeordnetem Gewichtgeber benötigt werden und diese Baugruppen besonders teuer sind. Je größer die Anzahl der Teilmengen-Produktbehälter ist, desto eher ist es möglich, eine Kombination von n Teilmengen zu finden, die zusammen das Sollgewicht ergeben oder nur wenig von diesem abweichen. Eine Erhöhung der Anzahl der teuren Gewichtgeber und der zugehörigen Bauteile führt zu hohen Kosten.

Um die Anzahl der Bauteile der Wiegevorrichtung zu verringern, wurde bereits eine Konstruktion vorgeschlagen (EP-OS 0 114 745), bei dem von einem Wiege-Produktbehälter aus zwei Teilmengen-Produktbehälter beschickt werden. Zur Verteilung ist jedem Wiege-Produktbehälter ein Verteiltrichter zugeordnet, der je nach Schwenklage die abgewogene Produktmenge dem einen oder dem anderen der zugeordneten Teilmengen-Produktbehälter zuführt. Dadurch wird bei einer gegebenen Anzahl von Teilmengen-Produktbehältern die Anzahl der Wiege-Produktbehälter halbiert. Die Baukosten werden aber nicht wesentlich reduziert, da jedem Wiege-Produktbehälter eine Bewegungseinrichtung für die Betätigung des Verteiltrichters zugeordnet werden muß.

Bei einer weiteren bekannten Wiegevorrichtung der eingangs genannten Art (DE-OS 32 26 215) sind unterhalb jedes Wiege-produktbehälters auf einem hin- und herbewegbaren Träger zwei Teilmengen-Produktbehälter zugeordnet, die durch entsprechende Bewegung des Trägers wahlweise so unter den Wiege-Produktbehälter bewegbar sind, daß dieser seinen Inhalt in den einen oder den anderen Teilmengen-Produktbehälter entleeren kann. Auch hier ist zwar bei einer gegebenen Anzahl von Teilmengen-Produktbehältern die Zahl der Wiege-Produktbehälter halbiert, jedoch muß auch hier jedem Wiege-Produktbehälter eine eigene Bewegungseinrichtung für die beiden Teilmengen-Produktbehälter zugeordnet werden.

Der Erfindung liegt die Aufgabe zugrunde, eine Wiegevorrichtung der eingangs genannten Art so auszubilden, daß mit geringem Bauaufwand einem Wiege-Produktbehälter mehrere Teilmengen-Produktbehälter zugeordnet werden können.

Diese Aufgabe wird nach der Erfindung dadurch gelöst, daß die Teilmengen-Produktbehälter in einer Reihe auf einem gemeinsamen Träger angeordnet sind, wobei der gemeinsame Träger mit einem Schrittantrieb antreibbar ist, dessen Bewegungsschritte gleich einem Teilungsabstand oder einem ganzen Vielfachen des Teilungsabstandes der Teilmengen-Produktbehälter ist.

Auch mit dieser Vorrichtung wird bei einer gegebenen Anzahl von Teilmengen-Produktbehältern die Anzahl der Wiege-Produktbehälter reduziert, nämlich mindestens auf die Hälfte. Dies wird jedoch nicht mit einem anderen großen Bauaufwand erkauft, da die nötigen Bewegungen der Teilmengen-Produktbehälter mittels eines einzigen Antriebes erfolgen. Man kann deshalb bei geringem Bauaufwand sehr viele Teilmengen-Produktbehälter vorsehen, wodurch viele Auswahlmöglichkeiten bestehen und dadurch sehr genaue Wiegungen bei hoher Leistung der Vorrichtung möglich sind.

Gemäß einer bevorzugten Ausführungsform der Erfindung (Anspruch 2) sind mehrere Reihen aus Teilmengen-Produktbehältern vorgesehen. Dadurch kann die Zahl der Teilmengen-Produktbehälter wei-

terhin erhöht werden. Hierbei können die einem Wiege-Produktbehälter zugeordneten mehreren Teilmengen-Produktbehältern dadurch beschickt werden, daß gemäß Anspruch 3 mehrere unabhängig öffenbare Ausflußöffnungen vorgesehen sind. Eine konstruktiv besonders zweckmäßige Ausführungsform hierfür ist im Anspruch 4 angegeben und vor allem dann geeignet ,wenn zwei Reihen aus Teilmengen-Produktbehältern vorgesehen sind.

Die Wiegevorrichtung kann sowohl kreisförmig (Anspruch 5) als auch geradlinig (Anspruch 6) ausgebildet werden. Im Prinzip sind auch Krümmungen möglich, die von einer kreisförmigen Krümmung abweichen. Besonders zweckmäßig jedoch sind kreisförmige und geradlinige Reihen.

Gemäß einer weiteren Ausgestaltung der Erfindung (Anspruch 7) ist der Sammeltrichter in zwei oder mehr Teil-Sammeltrichter unterteilt, wobei Variationen gemäß den Ansprüchen 8 bis 11 möglich sind. Dadurch kann die Leistung der Wiegevorrichtung weiterhin gesteigert werden, da die Wiegevorrichtung mehrere Abgabeöffnungen für abgewogene Mengen aufweist, von denen aus z.B. mehrere Verpackungsmaschinen versorgt werden können.

In der Zeichnung sind Ausführungsbeispiele stark schematisiert dargestellt. Es zeigen:

Fig. 1    einen vertikalen Schnitt durch eine Wiegevorrichtung, bei der die Wiege-Produktbehälter und die Teilmengen-Produktbehälter kreisförmig angeordnet sind, entsprechend der Linie I-I in Fig. 2,

Fig. 2    eine Draufsicht auf die Vorrichtung nach Fig. 1 entsprechend dem Pfeil II in Fig. 1,

Fig. 3    eine der Fig. 2 entsprechende Draufsicht auf eine Wiegevorrichtung, bei der die Wiege-Produktbehälter und die Teilmengen-Produktbehälter längs geraden Linien angeordnet sind,

Fig. 4    eine Draufsicht auf einen Sammeltrichter, der
         durch zueinander konzentrische Wände in Teil-
         Sammeltrichter unterteilt ist,

Fig. 5    eine Draufsicht auf einen kreisrunden Sammeltrichter, der segmentförmig in Teil-Sammeltrichter unterteilt ist und

Fig. 6    eine Draufsicht auf einen rechteckigen Sammeltrichter, der durch gerade Wände in mehrere Teil-
         Sammeltrichter unterteilt ist.

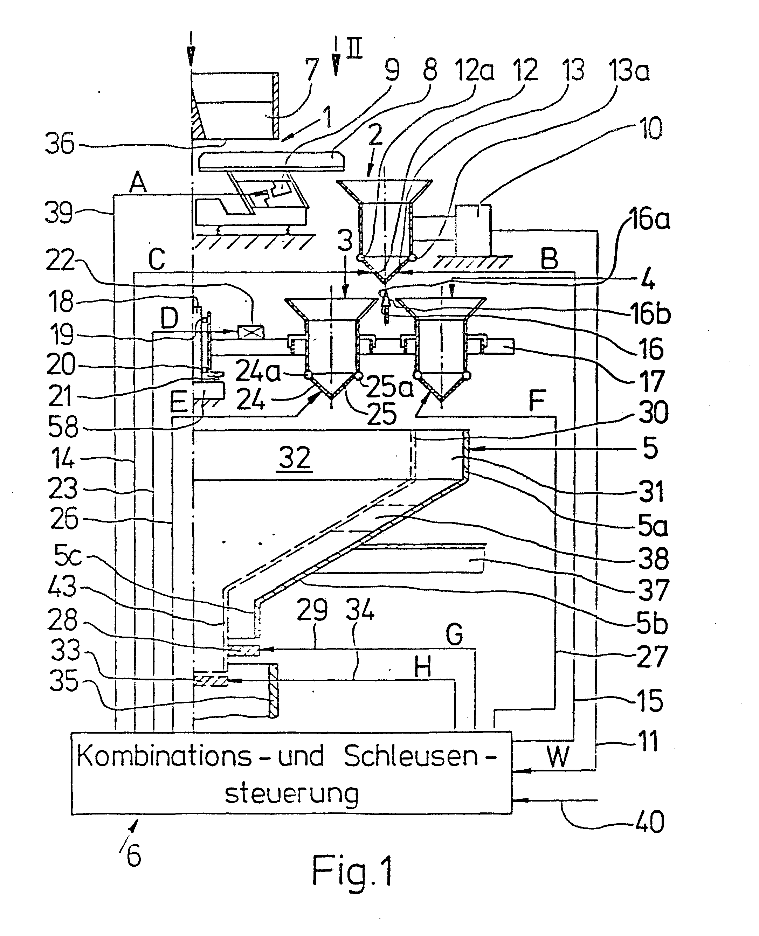

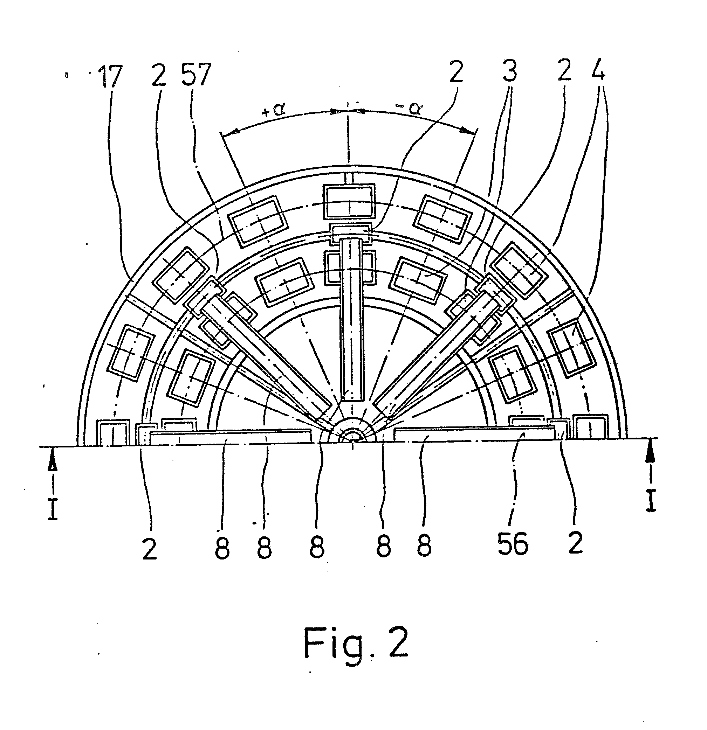

Die Wiegevorrichtung nach den Fig. 1 und 2 hat einen insgesamt mit 1 bezeichneten Produktverteiler, mehrere, kreisförmig angeordnete Wiege-Produktbehälter 2, unterhalb der Wiege-
Produktbehälter angeordnete Teilmengen-Produktbehälter 3 und
4, wobei die Teilmengen-Produktbehälter auf einem inneren
Kreis 56 und die Teilmengen-Produktbehälter 4 auf einem äußeren
Kreis 57 angeordnet sind, einen Sammeltrichter 5 und eine nur
symbolisch als Rechteck angedeutete Kombinations- und Schleusensteuerung (Steuergerät 6).

Der in der Zeichnung dargestellte Produktverteiler 1 hat einen
Zuteilbehälter 7 und sternförmig angeordnete Zuteilrinnen 8,die
vom Zuteilbehälter 7 aus mit zu verpackendem Gut beschickt werden. Die Zuteilrinnen 8 werden in bekannter Weise mittels eines Vibrators 9 in Schwingung versetzt, wodurch eine Förderwirkung in Richtung der Wiege-Produktbehälter entsteht. Die Tätigkeit des Vibrators 9 wird durch ein Steuersignal A gesteuert,
wodurch die Förderwirkung der Zuteilrinne 8 reguliert werden
kann. Das Steuersignal wird vom Steuergerät 6 über eine Leitung 39 zugeführt.

Jeder Wiege-Produktbehälter 2 ist an einem Gewichtgeber 10
aufgehängt, der ein elektrisches Wiegesignal W abgeben kann,
das über eine Leitung 11 dem Steuergerät 6 zugeführt wird.Der
Boden jedes Wiege-Produktbehälters wird durch zwei Klappen
12 und 13 gebildet, die um Gelenke 12a und 13a schwenkbar
sind. Jede Klappe kann unabhängig von der anderen Klappe geöffnet werden, und zwar aufgrund von Steuersignalen B und C, die von der Steuerung 6 ausgehen (siehe Leitungen 14, 15) und auf eine Öffnungsvorrichtung für die Bodenklappen einwirken. Unterhalb der Bodenklappen ist ein Leitelement 16 mit Leitflächen 16a, 16b angeordnet. Bei Öffnung der Klappe 12 wird das im Wiege-Produktbehälter 2 befindliche Produkt in den Teilmengen-Produktbehälter 3 abgelassen, wobei die Leitfläche 16a das richtige Fließen des Produktes bewirkt. Die Klappe 13 ist in diesem Falle geschlossen. Andererseits kann bei geschlossener Klappe 12 die Klappe 13 geöffnet werden, wonach das Produkt über die Leitfläche 16b in den Teilmengen-Produktbehälter 4 fließt.

Die Teilmengen-Produktbehälter 3 und 4 sind an einem gemeinsamen Träger 17 befestigt. Der Träger 17 ist in seinem Zentrum auf einem Zapfen 18 über Kugellager 19, 20 radial gelagert. Das Gewicht des Trägers samt an ihm befindlicher Bauteile wird über ein Axial-Wälzlager 21 aufgenommen. Dem Träger 17 ist eine symbolisch angedeutete Antriebsvorrichtung 22 zugeordnet, mit der der Träger schrittweise um die Winkel $\alpha$ (siehe Fig. 2) gedreht werden kann. Die Drehung wird durch ein Steuersignal D ausgelöst, das über eine Leitung 23 zugeführt wird. Der Lagerzapfen 18 ist fest mit dem Gestell verbunden, von dem ein Teil 58 dargestellt ist.

Jeder Teilmengen-Produktbehälter 3 und 4 hat zwei Bodenklappen 24 und 25, die gleichzeitig um Gelenke 24a und 25a schwenkbar sind. Die Schwenkung wird durch über Leitungen 26 und 27 von der Steuerung 6 aus zugeführte Steuersignale E und F ausgelöst, die auf eine nicht dargestellte Öffnungseinrichtung einwirken.

Der Sammeltrichter 5 ist an Trägern 37 gehalten und hat einen zylindrischen Eingangsteil 5a, einen kegeligen Verjüngungsteil 5b und einen zylindrischen Ausgangsteil 5c, der den Auslaufteil des Trichters bildet. Unten ist der Sammeltrichter durch eine Schleuse 28 abgeschlossen, die mit einer nicht ge-

zeigten Bewegungsvorrichtung in eine Öffnungsstellung und
in eine Schließstellung bringbar ist. Bewirkt wird die Öffnung und Schließung durch ein Steuersignal G, das von einer
Steuerung 6 aus über eine Leitung 29 zugeführt wird.

Mit gestrichelten Linien ist dargestellt, daß konzentrisch
zum Trichter 5 ein weiterer Sammeltrichter angeordnet werden
kann, so daß zwei Trichterräume 31 und 32 bestehen. Der Trichterraum 31 wird von den Teilmengen-Produktbehältern 4 aus und
der Trichterraum 32 von den Teilmengen-Produktbehältern 3 aus
mit Produkt beschickt. Der Trichterraum 32 ist unten durch
eine eigene Schleuse 33 abgeschlossen, deren Öffnung und
Schließung durch ein elektrisches Signal ausgelöst wird, das
einer Schleusenbetätigungseinrichtung über eine Leitung 34
von dem Steuergerät 6 aus zugeführt wird. Beide Trichterräume 31 und 32 münden in ein Auffangrohr 35, das z.B. das Füllrohr einer Verpackungsmaschine sein kann. Es können auch mehr
als zwei Trichterräume 31 und 32 vorgesehen sein, wobei dann
weitere Sammeltrichter ineinandergeschachtelt sind.

Die Vorrichtung arbeitet wie folgt. Das zu verpackende Produkt
wird vom Zuteilbehälter 7 aus, der eine Beschickungsöffnung 36
aufweist, auf die Zuteilrinnen 8 gegeben, die das Produkt zu
den Wiege-Produktbehältern 2 fördert. Bei dem gezeichneten
Ausführungsbeispiel sind insgesamt acht Wiege-Produktbehälter
2 samt zugeordnetem Gewichtgeber 10 vorgesehen. Wenn das erwünschte Teilgewicht ungefähr erreicht ist, z.B. ein Gewicht
von ungefähr 25 Gramm, wenn eine Verpackungsportion von möglichst genau 100 Gramm aus vier Teilmengen zusammengestellt werden soll, öffnet eine der Klappen 12 und 13. Welche Klappe geöffnet wird, bestimmt das Steuergerät 6, das feststellt, welcher der Teilmengen-Produktbehälter 3, 4, die sich
unterhalb des Wiege-Produktbehälters befinden, gerade leer ist.

Wie man aus Fig. 2 ersehen kann, ist die Zahl der Teilmengen-Produktbehälter bei dem gezeichneten Ausführungsbeispiel viermal so groß, wie die Zahl der Wiege-Produktbehälter, d.h. es sind zweiunddreißig Teilmemgen-Produktbehälter vorhanden. Einige Teilmengen-Produktbehälter werden etwas mehr und andere etwas weniger als die genaue Teilmenge von z.B. 25 g enthalten. Möglich ist natürlich auch, daß Teilmengen-Produktbehälter exakt eine Teilmenge von z.B. 25 g enthalten.

Die Teilmengen-Produktbehälter 3, 4 werden wahlweise unter die Wiege-Produktbehälter durch schrittweise Drehung des Trägers 17 um Winkelschritte $+\alpha$ oder $-\alpha$ bewegt. Bei dem gezeichneten Beispiel ist dieser Winkelschritt 22,5 Winkelgrade (bei einer Einteilung des rechten Winkels in 90 Winkelgrade). Im allgemeinen wird der Träger 17 nur Hin- und Herbewegungen im Bereich des Winkels $\alpha$ oder der Winkel $+\alpha$, $-\alpha$ ausführen. Im Prinzip jedoch kann auch eine fortschreitende Bewegung stattfinden, allerdings in jedem Fall schrittweise, wobei das Steuergerät 6 die Drehung entsprechend den Angaben eines Rechners ausführt, der ebenfalls zum Steuergerät gehört und der die zweckmäßigste Drehung für das Verbringen leerer Teilmengen-Produktbehälter unter Wiege-Produktbehälter errechnet.

Zur Zusammenstellung einer Verpackungsportion werden mehrere, z.B. insgesamt vier Teilmengen-Produktbehälter 3, 4 in den Sammeltrichter 5 entleert. Welche Teilmengen-Produktbehälter hierfür ausgewählt werden, wird vom Rechner des Steuergerätes 6 bestimmt. Dieser wählt vier Teilmengen aus, die zusammen möglichst genau die Verpackungsportion von z.B. 100 g ergeben. Dies wird beispielsweise erreicht, wenn Teilmengen von 22, 28, 23 und 27 g zusammengeführt werden.

In das Steuergerät 6 wurde ein Sollwert eingegeben, was durch den Pfeil 40 symbolisiert ist.

Die Erfindung wurde am Beispiel einer Wiegevorrichtung erläutert, bei der zwei Reihen aus Teilmengen-Produktbehältern vorhanden sind. Die Erfindung kann auch schon mit einer Reihe aus Produktbehältern realisiert werden oder auch mit mehr als zwei Reihen.

Mehrere Trichterräume, z.B. zwei Trichterräume 31, 32, ermöglichen es, parallel zueinander Verpackungsportionen zusammenzustellen und diese rasch nacheinander durch Öffnen der Schleusen 28, 33 dem Auffangrohr 35 zuzuführen. Die Wiegevorrichtung kann dann Verpackungsportionen mit hoher Frequenz an eine Verpackungsmaschine liefern. Wie bereits gesagt, können auch noch mehr als zwei Trichterräume 31, 32 vorgesehen werden, wodurch die Leistung der Wiegevorrichtung weiterhin erhöht werden kann.

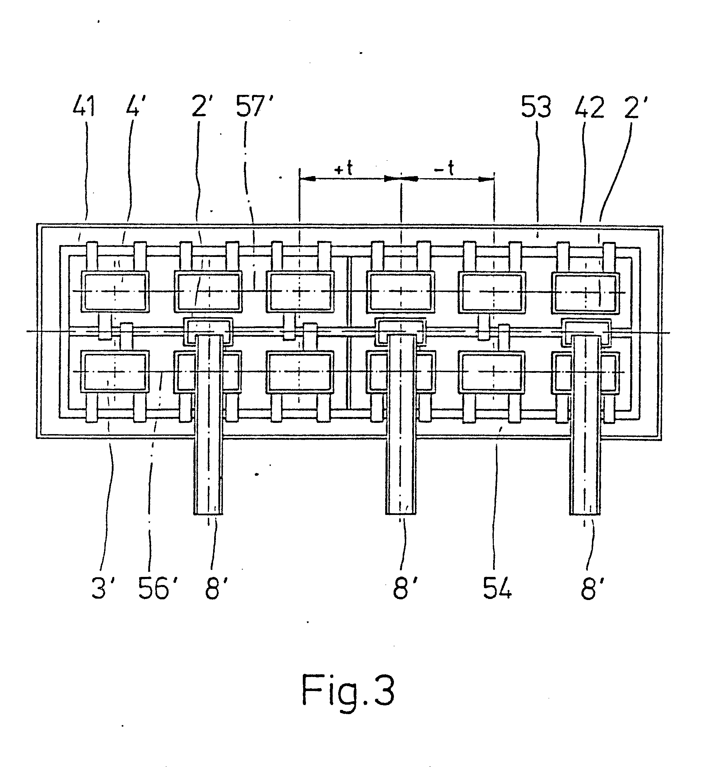

Fig. 3 ist eine Draufsicht analog der Draufsicht nach Fig. 2 bei einer Ausführungsform der Erfindung, bei der die hier mit 3' und 4' bezeichneten Teilmengen-Produktbehälter längs geraden Reihen angeordnet sind. Ein vertikaler Schnitt durch die Wiegevorrichtung nach Fig. 3 sieht ähnlich aus wie Fig. 1. Das Produkt wird über Zuteilrinnen 8'Teilmengen-Wiegebehältern 2' zugeführt. Die Teilmengen-Produktbehälter 3' und 4' sitzen auf einem schrittweise geradlinig bewegbaren Träger 41, der im Bereich +t und/oder im Bereich -t hin- und herbewegbar ist. Eine fortschreitende Bewegung ist bei dieser Ausführung nur begrenzt möglich, kann jedoch im Prinzip über die Bereiche von +t bis -t hinaus erfolgen.

Um die Analogie zur Ausführungsform nach den Fig. 1 und 2 herauszustellen, sind die Reihen, längs denen die Teilmengen-Produktbehälter 3' und 4' angeordnet sind, ebenfalls durch strichpunktierte Linien symbolisiert und mit 56' und 57' bezeichnet.

Unterhalb der Teilmengen-Produktbehälter 3', 4' ist ein rechteckiger Sammeltrichter 42 angeordnet. Auch in diesem Sammeltrichter können weitere Sammeltrichter eingeschachtelt sein.

Die Wiegevorrichtung nach Fig. 3 arbeitet im übrigen wie die Wiegevorrichtung nach den Fig. 1 und 2, so daß eine erneute Beschreibung der Funktion entbehrlich erscheint.

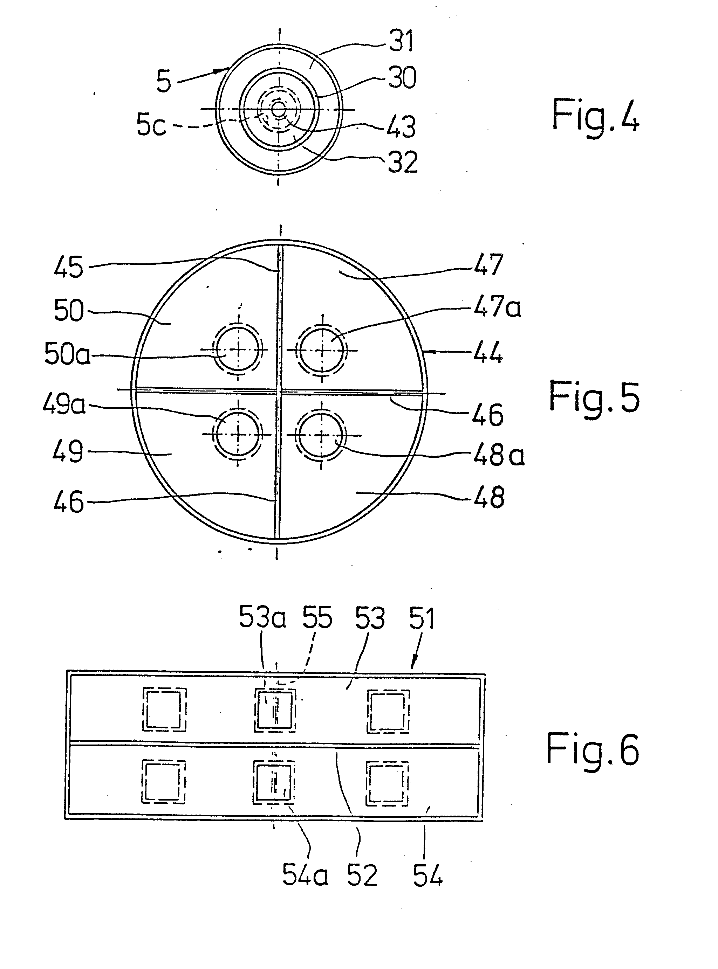

In den Fig. 4 bis 6 sind mögliche Trichterausbildungen dargestellt. Alle Figuren sind Ansicht von oben.

Fig. 4 zeigt die Trichteranordnung nach Fig. 1 mit dem äußeren Trichter 5 und dem darin eingeschachtelten weiteren Trichter 30. Vom inneren Trichter 30 ist die Ausflußöffnung 43 direkt zu sehen, während die Ausflußöffnung 5c des äußeren Trichters verdeckt und deshalb strichpunktiert dargestellt ist. Der weitere Sammeltrichter 30 ist mittels Stützen 38 gehalten, die vom äußeren Sammeltrichter 5 abragen.

Fig. 5 zeigt eine Ausführungsform mit einem insgesamt mit 44 bezeichneten Sammeltrichter, der durch Wände 45 und 46 in vier Segmente 47, 48, 49, 50 unterteilt ist. Jedes Segment 47 hat eine eigene Ausflußöffnung 47a, 48a, 49a, 50a.

Fig. 6 zeigt einen rechteckigen Sammeltrichter, der insgesamt mit 51 bezeichnet ist. Der Trichter ist durch eine Wand 52 in Trichterräume 53, 54 unterteilt. Der Trichterraum 53 hat eine Ausflußöffnung 53a und der Trichterraum 54 eine Ausflußöffnung 54a. Es ist auch eine Unterteilung in vier Abteile durch eine gestrichelt eingezeichnete weitere Trennwand 55 möglich, wodurch insgesamt vier Abteile entstehen und jedem Abteil wieder eine Ausflußöffnung zugeordnet. Die dann mögliche Lage der Ausflußöffnungen ist in Fig. 6 gestrichelt eingezeichnet.

Ansprüche:

1. Wiegevorrichtung, insbesondere zum Wiegen von grobstückigen Produkten, mit einem Produktverteiler, mehreren Wiegeeinrichtungen, von denen jede einen vom Produktverteiler aus
speisbaren Wiege-Produktbehälter und einen diesem zugeordneten Gewichtgeber aufweist, unterhalb der Wiege-Produktbehälter angeordneten Teilmengen-Produktbehältern, wobei einem
Wiege-Produktbehälter mindestens zwei Teilmengen-Produktbehälter zugeordnet sind, in die der Inhalt der Wiege-Produktbehälter entleerbar ist, einem Sammeltrichter zum Sammeln von
aus mehreren Teilmengen-Produktbehältern abgegebenen Teilmengen und einer Kombinations-Wahlschaltung, die aus den Teilmengen eine Kombination einer bestimmten Anzahl von Teilmengen
ermittelt, die zusammen einer gewünschten Gesamtmenge möglichst
nahekommen und die Entleerung in den Sammeltrichter durch Betätigung von Schleusen an den Teilmengen-Produktbehältern entsprechend steuert, dadurch gekennzeichnet, daß die Teilmengen-
Produktbehälter (3, 4; 3', 4') in einer Reihe (56, 57; 56',
57') auf einem gemeinsamen Träger (17; 41) angeordnet sind.

- 2 -

wobei der gemeinsame Träger (17; 41) mit einem Schrittantrieb (22) antreibbar ist, dessen Bewegungsschritte ($\alpha$; t) gleich einem Teilungsabstand oder einem ganzen Vielfachen des Teilungsabstandes der Teilmengen-Produktbehälter (3,4; 3', 4') ist.

2. Wiegevorrichtung nach Anspruch 1, gekennzeichnet durch zwei oder mehr parallele Reihen (56, 57; 56', 57') aus Teilmengen-Produktbehältern(3, 4; 3', 4'), wobei alle Reihen (56, 57; 56', 57') auf einem gemeinsamen Träger (17; 41) angeordnet sind.

3. Wiegevorrichtung nach Anspruch 2, dadurch gekennzeichnet, daß jeder Wiege-Produktbehälter (2; 2') mindestens zwei unabhängig voneinander öffenbare Ausflußöffnungen (12, 13) aufweist, von denen jede einer Reihe (56, 57; 56', 57') aus Teilmengen-Produktbehältern (3, 4; 3', 4') zugeordnet ist.

4. Wiegevorrichtung nach Anspruch 3, dadurch gekennzeichnet, daß jeder Wiegebehälter (2; 2') zwei unabhängig voneinander betätigbare Bodenklappen (12, 13) aufweist, wobei unterhalb der unteren Ränder der Bodenklappen (12, 13) Leitflächen (16a, 16b) angeordnet sind.

5. Wiegevorrichtung nach einem der vorhergehenden Ansprüche, dadurch gekennzeichnet, daß die Reihen (56, 57) aus Teilmengen-Produktbehältern (3 , 4 ) kreisförmig sind und der gemeinsame Träger (17) um eine zentrale Lagerstelle (18, 19) drehbar ist (Fig. 1, 2).

6. Wiegevorrichtung nach einem der Ansprüche 1 bis 4, dadurch gekennzeichnet, daß die Reihen (56', 57') aus Teilmengen-Produktbehältern (3', 4') geradlinig sind und der gemeinsame Träger (41) längs einer geraden Führung bewegbar ist (Fig. 3).

7. Wiegevorrichtung nach einem der vorhergehenden Ansprüche, dadurch gekennzeichnet, daß der Sammeltrichter (5; 44; 51) in zwei oder mehr Teil-Sammeltrichter (31, 32; 47, 48, 49, 50; 53, 54) unterteilt ist, wobei jeder Teil-Sammeltrichter eine eigene Ausflußöffnung (5c, 43; 47a, 48a, 49a, 50a; 53a, 54a) aufweist.

8. Wiegevorrichtung nach Anspruch 7, dadurch gekennzeichnet, daß jeder Reihe (56, 57; 56', 57') aus Teilmengen-Produktbehältern(3, 4; 3', 4') ein gemeinsamer Teil-Sammeltrichter (31, 32; 53, 54) zugeordnet ist.

9. Wiegevorrichtung nach einem der Ansprüche 7 und 8, dadurch gekennzeichnet, daß die Teil-Sammeltrichter (31, 32) zueinander konzentrisch ineinandergeschachtelt sind.

10. Wiegevorrichtung nach einem der Ansprüche 7 und 8, dadurch gekennzeichnet, daß die Teil-Sammeltrichter (47, 48, 49, 50) Segmente eines kreisförmigen Trichters (44) sind (Fig. 5).

11. Wiegevorrichtung nach einem der Ansprüche 7 und 8, dadurch gekennzeichnet, daß die Teil-Sammeltrichter (53, 54) als sich nach unten verjüngende Kästen mit geraden Seitenwänden ausgebildet sind, wobei eventuell auch Querwände (55) vorgesehen sind (Fig. 6).

Fig.1

0196552

1/4

Kombinations - und Schleusen - steuerung

0196552

Fig. 2

3|4

0196552

Fig.3

Fig.4

Fig.5

Fig.6